# EUROPEAN PATENT APPLICATION

(11) **EP 4 555 840 A1**
(43) Date of publication of application: **21.05.2025**
(21) Application number: 23210663.3
(22) Date of filing: 17.11.2023
(51) Int. Cl.: A01B 3/46, A01B 79/00, A01B 69/00, A01B 69/04

(54) **A CONTROLLER FOR A PLOUGH, A PLOUGH SYSTEM AND ASSOCIATED METHODS**

(71) Applicant: Overum Industries AB, 594 72 Överum (SE)
(72) Inventor: HERTZOG, Daniel, 590 96 Överum (SE)
(74) Representative: Heuking Kühn Lüer Wojtek PartGmbB

(57) **Abstract**

A controller (552) for a plough. The controller is configured to: receive furrow edge information (553), which represents the location of the edge of a furrow from an earlier ploughing run that is adjacent to the furrows being created as part of a current ploughing run; receive tractor location information (555), which represents the location of a tractor as it is propelling the plough during the ploughing run; and receive relative plough position information (557) that defines the lateral position of the plough relative to the tractor during the ploughing run. The controller can then determine plough location information, which represents the location of the plough, based on the received tractor location information and the received relative plough position information; and set a width of a first furrow (560) of the plough based on the received furrow edge information (553) and the determined plough location information for the current and / or a future ploughing run.

## Description

### Background of the Invention

The present disclosure relates to a controller for a plough that can automatically set lateral operating characteristics of the plough in order to control the operation of the plough, an associated plough system and corresponding methods.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

Most modern ploughs are of the reversible type, in which the main frame is rotatable by 180 degrees (i.e. reversed) with respect to the headstock. A turning cylinder attached to the headstock may be used to rotate (reverse) the plough. During rotation of the main frame, a first set of plough bodies, which was initially arranged below the main frame (first configuration), is transferred to the top of the main frame. At the same time, a second set of plough bodies, which was initially arranged on top of the main frame, is then transferred to a position below the main frame. The reversible plough is then in its second configuration. The main frame may be repeatedly rotated (reversed) between the first and second configuration, particularly during turning manoeuvres on the headlands. Whenever the plough is reversed, the first and second set of plough bodies swap position.

### Summary of the Invention

According to one aspect of the current disclosure, there is provided a controller for a plough, wherein the controller is configured to:
receive furrow edge information, which represents the location of the edge of a furrow from an earlier ploughing run that is adjacent to the furrows being created as part of a current ploughing run;
receive tractor location information, which represents the location of a tractor as it is propelling the plough during the ploughing run;
receive relative plough position information that defines the lateral position of the plough relative to the tractor during the ploughing run;
determine plough location information, which represents the location of the plough, based on the received tractor location information and the received relative plough position information; and
set a width of a first furrow of the plough based on the received furrow edge information and the determined plough location information for the current and / or a future ploughing run.

Advantageously, setting the width of a first furrow in this way can improve the quality of the ploughing operation For instance, in terms of the uniformity of the ploughing operation.

The controller may be further configured to:
receive guiding lines information, which defines at least an intended route of the plough through a work area of the field; and
set the width of the first furrow of the plough also based on the guiding lines information.

The controller may be further configured to set a furrow width of the plough based on one or more of: the first furrow width; ii) the determined plough location information; iii) any received guiding lines information; iv) the received furrow edge information; and v) a direction of travel of the plough / tractor.

The controller may be further configured to:
receive field information that defines at least the width of a work area of the field; and
determine guiding lines information for the ploughing runs in the work area of the field based on the received field information, wherein the guiding lines information comprises: i) an intended route of the plough through the work area of the field; ii) a target value for the width of the first furrow of the plough; and iii) a target value for the furrow width, such that at an integer number of ploughing runs will fit across the entire width of the work area of the field.

The controller may be further configured to:
determine the location of a calibration ploughing run based on tractor location information obtained during the calibration ploughing run; and
determine the guiding lines information for the remaining ploughing runs in the work area based on: i) the received field information; and ii) the determined location of the calibration ploughing run, such that at an integer number of ploughing runs will fit across the width of the remaining unploughed area of the work area of the field.

The calibration ploughing run may be the first ploughing run in the work area of the field.

The calibration ploughing run may be an intermediate ploughing run in the work area of the field.

The controller may be further configured to: determine the guiding lines information also based on: iii) values of the width of the first furrow of the plough and values of the furrow width that were used during the calibration ploughing run.

The controller may be further configured to: set, and then apply, target values for the width of the first furrow of the plough and / or the furrow width that change during a ploughing run.

The controller may be further configured to: gradually change the target values for width of the first furrow of the plough and / or the furrow width during a predetermined number of ploughing runs.

The controller may be further configured to: set the predetermined number of ploughing runs to a minimum number such that as many of the ploughing runs as possible in the work area can be parallel with each other.

The controller may be further configured to: autonomously drive the tractor that provides propulsion to the plough based on the determined guiding lines information.

There is also disclosed a plough system comprising:
a plough; and
any controller disclosed herein.

The plough may be connectable to a tractor in such a way that there is at least some lateral freedom of movement of the plough relative to the tractor.

There is also disclosed a computer implemented method of operating a plough, the method comprising:
receiving furrow edge information, that represents the location of the edge of a furrow from an earlier ploughing run that is adjacent to the furrows being created as part of a current ploughing run;
receiving tractor location information that represents the location of a tractor as it is propelling the plough during the ploughing run;
receiving relative plough position information that defines the lateral position of the plough relative to the tractor during the ploughing run;
determining plough location information, which represents the location of the plough, based on the received tractor location information and the received relative plough position information; and
setting a width of a first furrow of the plough for the current and / or a future ploughing run based on the received furrow edge information and the determined plough location information.

There may be provided a computer program, which when run on a computer, causes the computer to configure any apparatus, including a system, a controller, or a processor disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software may be an assembly program.

The computer program may be provided on a computer readable medium, which may be a physical computer readable medium such as a disc or a memory device, or may be embodied as a transient signal. Such a transient signal may be a network download, including an internet download.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3 shows a schematic representation of a headstock region of an agricultural plough implement;
Figure 4 shows an example image of a plough while it is working in the field, with various operating characteristics of the plough are labelled;
Figure 5 illustrates an example embodiment of a controller for a plough system according to an embodiment of the present disclosure;
Figure 6 shows an example of a non-rectangular work area of a field; and
Figure 7 illustrates schematically a computer-implemented method of operating a plough according to an embodiment of the present disclosure.

### Detailed Description of the Drawings

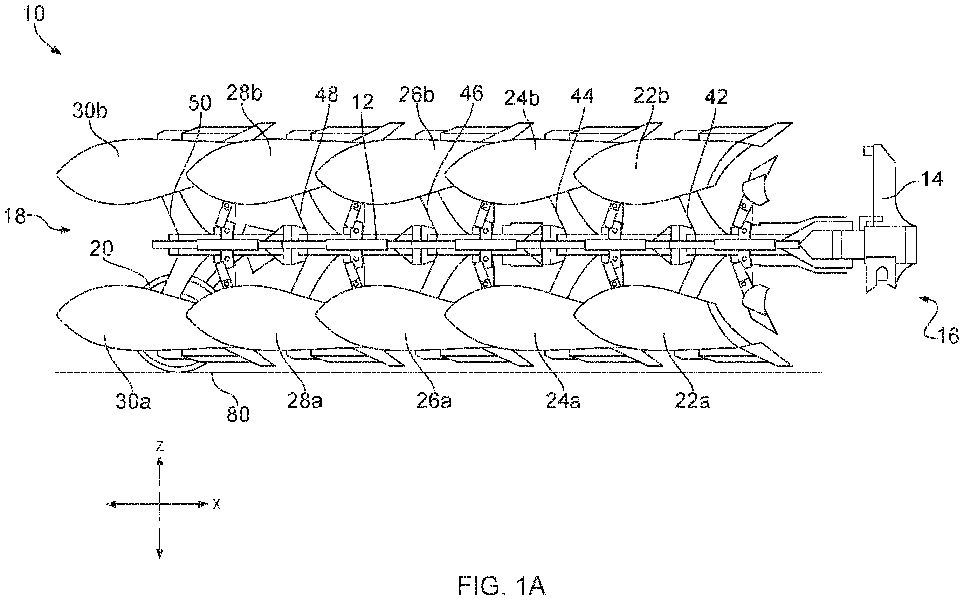

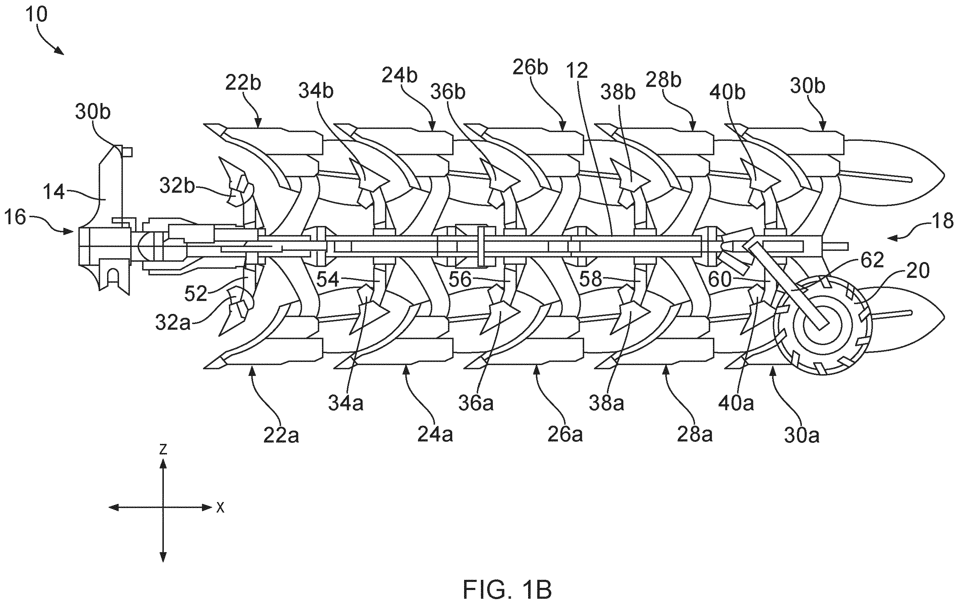

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular or round tube extending between a headstock 14 at a front end 16 of the plough towards a depth wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

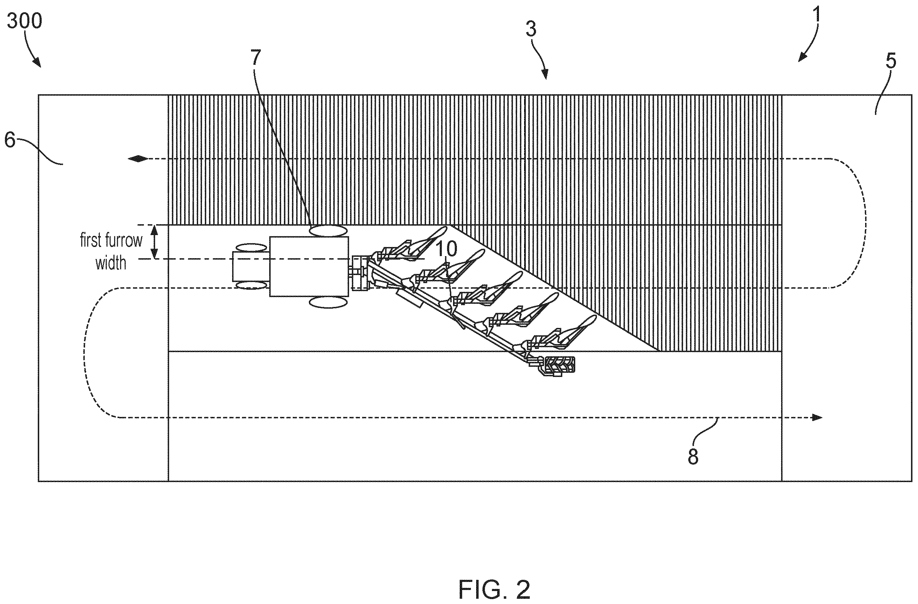

Turning to Figure 2, a typical operation of an agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5, 6. A tractor 7 draws the plough 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a headland/transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough 10 is also reversed. That is, the main frame 12 is rotated by 180 degrees with respect to the headstock 14 to move the plough from a first configuration to a second configuration. In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".

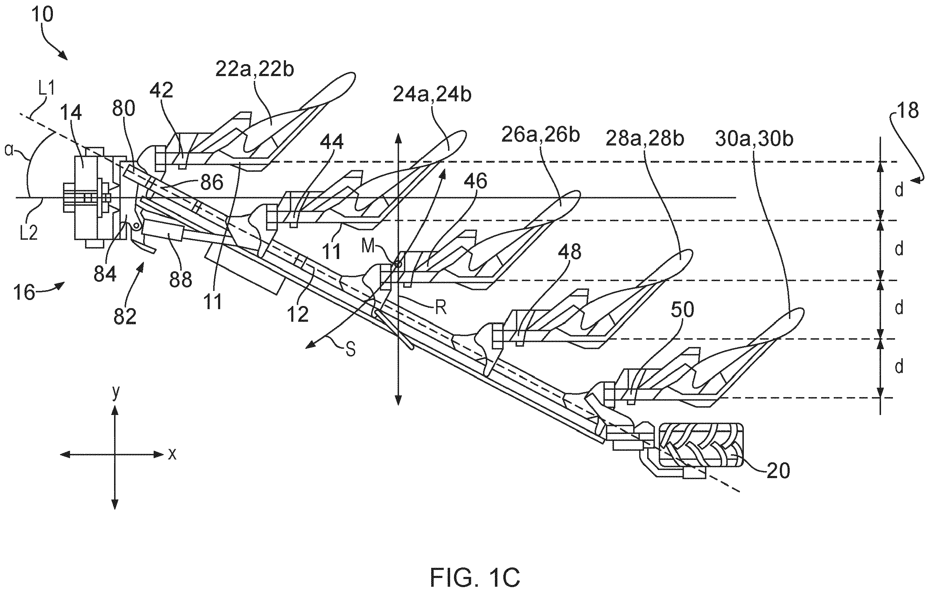

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. In particular, the furrow width can be defined as the distance between the landsides 11 of adjacent plough bodies. The landside 11 is the part of the plough body that slides along the face of the furrow wall on the opposite side to the mouldboard.

As the reversible plough 10 reaches the end of the first run, the main frame 12 is rotated by 180 degrees (reversed) with respect to the headstock 14. A turning cylinder (not shown), attached to the headstock 14 may be used to rotate (reverse) the plough 10. During rotation of the main frame, the first plurality of plough bodies, e.g. 22a, 24a, 26a, 28a, 30a, are transferred to the top of the plough 10. At the same time, the second plurality of plough bodies e.g. 22b, 24b, 26b, 28b, 30b, which were not in use in the previous run, is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.
Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough 10 the main frame 12 is supported by a depth wheel 20. The depth wheel 20 is arranged at the back end 18 of the plough 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes depth wheel 20, which acts as a depth wheel to adjust the ground clearance of the main frame 12. A linkage provided between the depth wheel 20 and the main frame 12 allows the operator to lift or lower the main frame 12 with respect to a ground surface 80. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by adjusting the link between the depth wheel 20 and the main frame 12, then the working depth of the plurality of first ground engaging tools shown in Figures 1A to 1C is increased, i.e. the plurality of first ground engaging tools are lowered further into the soil. If, on the other hand, the main frame 12 is lifted, then the working depth of the plurality of first ground engaging tools is decreased, i.e. the plurality of first ground engagement tools are pulled out of the soil.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle α with respect to a longitudinal axis L2 of a corresponding agricultural work vehicle. The longitudinal axis L2 of the agricultural work vehicle is parallel to its direction of travel and therefore represents a direction in which the work vehicle drags or pushes the plough 10. It will be appreciated that the angle α between the longitudinal axis L1 of the main frame 12 and the longitudinal axis L2 of the agricultural work vehicle may be changed by pivoting the main frame about the pivot 80. A plough width adjustment mechanism 82 comprises the pivot 80, link plate 84, a front part 86 of the main frame 12 and a width adjustment actuator 88. The width adjustment actuator 88 in this embodiment is a hydraulic cylinder. By retracting the width adjustment actuator 88, the front part 86 of the main frame 12 will be drawn closer towards the link plate 84, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top of Figure 1C.

A lateral adjustment of the plough bodies with respect to the agricultural work vehicle may also be possible without changing the angle α between the main frame 12 and the agricultural work vehicle. As will be discussed below, the plough implement can also include a lateral frame adjustment mechanism, which may be implemented as a sliding mechanism that allows for lateral movement of the main frame 12 with respect to the headstock 14 and, therefore, with respect to the agricultural work vehicle.

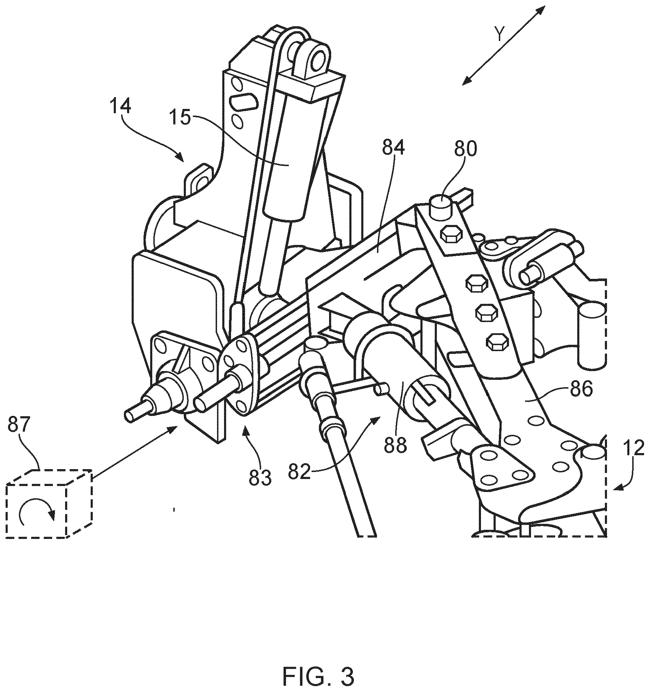

Figure 3 shows the headstock 14 along with parts of a plough width adjustment mechanism 82 and the lateral frame adjustment mechanism 83 in greater detail. The plough width adjustment mechanism 82 and the lateral frame adjustment mechanism 83 are both examples of a lateral adjustment mechanism that can move the main frame 12 and thus the ground engaging tools with respect to the headstock 14 in a lateral direction Y. The plough width adjustment mechanism 82 rotates the main frame 12 about the pivot 80, and since the ground engaging tools are fixed to the main frame 12 this results in the ground engaging tools being moved along a path that has a lateral component. The lateral frame adjustment mechanism 83 laterally moves the main frame 12 with respect to the headstock 14, and since the ground engaging tools are fixed to the main frame 12 this also results in the ground engaging tools being moved laterally. In this way, the lateral frame adjustment mechanism 83 can laterally translate the entire main frame 12 with respect to the headstock 14.

The lateral frame adjustment mechanism 83 is illustrated partly in an exploded view, with a motor 87 shown separated from the rest of the plough implement in order to more clearly illustrate the functionality of the mechanism. The motor may be an electric motor, a hydraulic motor or any other type of motor that can provide a suitable rotational force. In this example, the lateral frame adjustment mechanism 83 includes a lead screw mechanism that is adjusted by the motor 87. In this way, the lead screw mechanism translates the rotational force provided by the motor 87 to a linear force for laterally moving the main frame 12 with respect to the headstock 14. It will be appreciated that the lead screw mechanism shown in Figure 3 can be replaced with any linear actuator that can provide the lateral adjustment of the plough bodies with respect to the agricultural work vehicle.

Figure 3 also shows the turning cylinder 15, which is used to rotate (reverse) the main frame 12.

From the above description, it will be understood that the lateral arrangement of the plough implement 10 with respect to the agricultural vehicle may be changed in a variety of ways, two of which have been set out above. It should also be noted that a lateral adjustment of the plough 10 with respect to the agricultural work vehicle 7 does not require a lateral movement of every part of the plough implement 10 in a lateral direction. Rather, a lateral adjustment of the plough implement may be achieved by simply changing the lateral position of one or more ground engaging tools, such as the plough bodies, of the plough implement.

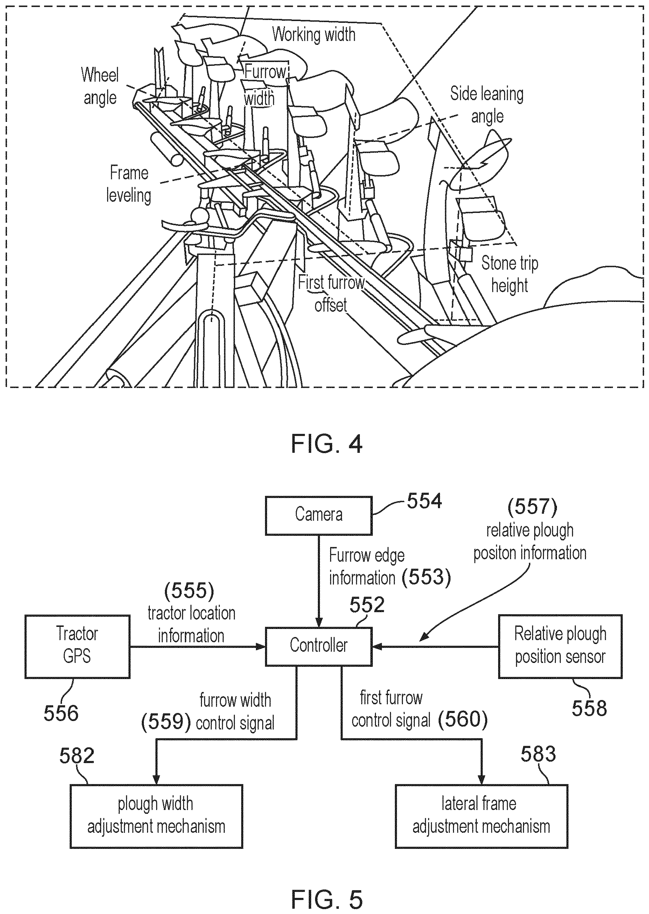

Figure 4 shows an example image of a plough while it is working in the field. Various operating characteristics of the plough are labelled to assist with the subsequent description in this document. The following operating characteristics are particularly relevant to the present disclosure:
- A first furrow width, which is labelled in Figure 2 but not shown in Figure 4. The width of the first furrow represents the lateral distance between: the landside of the first (front-most) plough body; and ii) the boundary between the already ploughed part of the field and the uncut field that is to be ploughed by the first plough body. The lateral frame adjustment mechanism that is described above is one example of an actuator that can set the first furrow width of the plough.
- A furrow width, as shown in Figure 4. The furrow width represents the lateral distance between two adjacent plough bodies. The furrow width can be determined as the lateral distance between the landsides of two adjacent plough bodies. The plough width adjustment mechanism that is described above is one example of an actuator that can set the furrow width of the plough.
- A working width of the plough, as shown in Figure 4. The working width represents the lateral distance between the plough bodies at the respective opposite ends of the main frame. As illustrated in Figure 4, the working width can be determined as the distance between: i) the landside of the last plough body; and ii) the outermost point of the first furrow width (that is created by the first plough body). The plough width adjustment mechanism that is described above is also an example of an actuator that can set the working width of the plough.
- A first furrow offset (as shown in Figure 4). The first furrow offset represents the lateral distance between the first (front-most) plough body and the headstock (such as a laterally centrally point of the headstock). The lateral frame adjustment mechanism that is described above is also an example of an actuator that can set the first furrow offset of the plough.

Figure 5 illustrates an example embodiment of a controller 552 for a plough system. Some or all of the functionality of the controller 552 can be provided by a processor that is co-located with the plough, a processor that is co-located with a tractor that is connected to the plough to provide propulsion to the plough and / or a processor that is provided remotely from the plough and the tractor. As will be discussed in detail below, the controller 552 can assist with the alignment of a first furrow of each ploughing run with a respective last furrow of the previous run and / or it can adjust the first furrow width so that it matches the width of the other furrows. A sensor (such as the camera 554 in Figure 5) can be used to identify the position of the last furrow of the previous run to adjust the position of the tractor / first plough body in order to create a homogenously oriented / distanced first furrow.
The controller 552 can also apply a control algorithm to set the lateral position of the plough with respect to the tractor, thereby setting the first furrow width, for the current and / or a future ploughing run.

The controller 552 receives furrow edge information 553, which represents the location of the edge of a furrow from an earlier ploughing run that is adjacent to the furrows being created as part of a current ploughing run. The furrow from the earlier ploughing run (which in practice is often the immediately preceding ploughing run) will be empty, such that it can be filled with the soil that is turned over by the first plough body during the current ploughing run. The furrow edge information 553 therefore defines the boundary between the already ploughed part of the field and the uncut field that is to be ploughed by the first plough body.

In this example, a camera 554 captures images that provide the furrow edge information 553. For example following application of an edge detection image processing operation on the captured images. The camera can be mounted on the tractor or the plough in any way such that it has a field of view that incudes the boundary between the already ploughed part of the field and the uncut field that is in front of the first plough body. Depending upon where the camera 554 is mounted, it can face forwards or backwards relative to the direction of travel of the tractor and the plough. In other examples, a radar, lidar or any other visual sensor can be used to provide the furrow edge information 553. By way of a yet further example, a mechanical sensor can be used that is able to mechanically detect the boundary between the already ploughed part of the field and the uncut field that is in front of the first plough body in order to provide the furrow edge information 553.

The controller 552 also receives tractor location information 555 that represents the location of a tractor as it is propelling the plough during a ploughing run. In this example, the tractor location information 555 is provided by a global positioning system (GPS) 556 that is associated with the tractor. Of course, any other location determining system can be used to provide the tractor location information 555, including other types of satellite-based radionavigation systems.

It has been found that during a ploughing run, especially when ploughing "on land" (when all four wheels of the tractor are on uncut parts of the field), the plough may not be directly behind the tractor. For example, the reactive force of the soil on the plough bodies can apply a lateral force to the plough bodies that is sufficient to cause the plough to move laterally with respect to the tractor. This can be especially prominent in clay soil. In some applications it can be possible to lock the lateral position of the plough with respect to the tractor. However, it has been found to be beneficial to allow the location of the plough with respect to the tractor to float - that is, to include a mechanism that provides at least some lateral freedom of movement of the plough relative to the tractor such that it's lateral position relative to the tractor is dictated by the forces that are experienced by the plough during the ploughing run. That is, a component of the plough can be connected to a component of the tractor such that relative lateral translational movement of the two components can occur in response to the reactive force of the soil on the plough bodies. This "floating" may enable the plough to move laterally with respect to the tractor by perhaps ±100mm or ±200mm. If the plough were locked in a lateral position with respect to the tractor (in which case there may be only up to about ±50mm relative lateral movement due to flex and play in joints), then any lateral forces that are experienced by the plough due to its engagement with the soil will be transferred to the tractor. When such lateral forces are transferred to the tractor they may cause the tractor to turn, and therefore reduce the quality and evenness of the ploughing run. Furthermore, the application of such lateral forces on the tractor can result in wasted energy and therefore an undesired increase in fuel consumption.

Due to this behaviour of the plough, the controller 552 also receives relative plough position information 557, which defines the position of the plough relative to the tractor. In particular, it defines the lateral position of the plough relative to the tractor. Figure 5 shows that a relative plough position sensor 558 can provide the relative plough position information 557. The relative plough position sensor 558 can be implemented in any of a number of ways. For example, it can be provided as a camera that looks back from the tractor to the plough. Such a camera can be the same camera 554 that provides the furrow edge information 553. Alternatively, the relative plough position sensor 558 can be provided as a mechanical sensor.

The controller 552 can then determine plough location information, which represents the location of the plough, based on the received tractor location information 555 and the received relative plough position information 558. The plough location information can be a set of coordinates that defines the location of the plough in the field. For instance, the controller 552 can determine the distance between the tractor and the plough based on the relative plough position information, convert that distance to an offset in the same coordinate system as the one that is used for the tractor location information 555 based on the direction of travel of the tractor / plough, and then add that offset to the tractor location information 555 to determine the plough location information.

The controller 552 can then advantageously set a width of a first furrow of the plough for the current and / or a future ploughing run based on the received furrow edge information 553 and the determined plough location information. As shown in Figure 5, the controller 552 can provide a first furrow control signal 560 to a lateral frame adjustment mechanism 583 in order to adjust the lateral offset between the main frame of the plough and the tractor. As discussed above, such an adjustment sets the width of the first furrow. The controller 552 can set the first furrow width so that the first plough body is positioned such that the newly ploughed first furrow is appropriately aligned with the empty last furrow from the earlier adjacent ploughing run. By setting the width of a first furrow in this way, the quality of the ploughing operation can be improved. For instance, it can be made more uniform because the first furrow width can be set in such a way that the first plough body is positioned in such a way that accounts for any lateral displacement of the plough with respect to the tractor (without having to lock the plough laterally with respect to the tractor).

In one example the controller 552 also receives guiding lines information (not shown), which defines an intended route of the plough through the work area of the field. In one example, such guiding lines information can be predetermined and saved in memory such that it can be accessed by the controller 552 so that it can be used during the ploughing runs in a ploughing operation. In another example, as will be discussed in more detail below, the controller 522 can determine the guiding lines information itself while the plough is operational in the field. The intended route that is represented by the guiding lines information can be displayed to a driver of the tractor such that they can manually steer the tractor along the intended route. Alternatively, the tractor may be driven autonomously such that it follows the intended route and / or automatically sets lateral operating characteristics of the plough (including the furrow width and / or the width of the first furrow) based on values that are determined by the controller 552. For example, the controller 552 can autonomously drive the tractor that provides propulsion to the plough based on the determined guiding lines information.

The controller 552 can set the width of the first furrow of the plough also based on the guiding lines information. For example, the controller 552 can set the first furrow width in such a way that it compensates for any difference between the actual location of the plough (as defined by the determined plough location information) and the intended location of the plough (as defined by the guiding lines information).

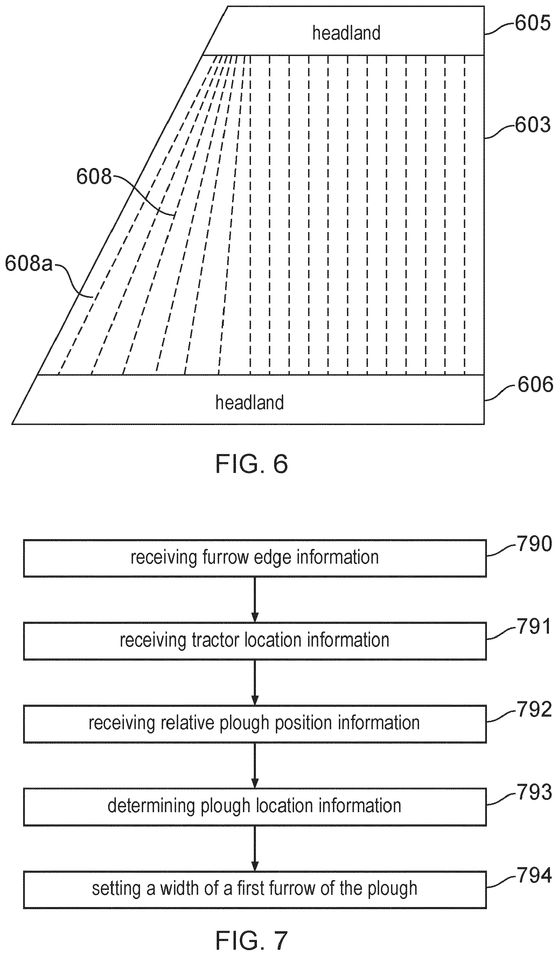

In an example where the controller 552 determines the guiding lines information itself, it can receive field information (not shown) that defines at least the width of the work area of the field. The field information can also define the length of the work area. If the work area is rectangular, then the width and the length of the work area can be provided as single values. If, however, any two opposite sides of the work are not parallel (and therefore the work area is not rectangular), then multiple values can be used to define one or more edges of the work area. Such multiple values can be provided as coordinates, for example. Further details of an example of the controller 552 can be used to plan a route through a non-rectangular field will be provided below with reference to Figure 6.

In any case, once the controller 552 has received the field information, it can set the guiding lines information based on the received field information. The guiding lines information can comprise: i) an intended route of the plough through the work area of the field (for example a sequence of coordinates that the plough should follow); ii) a target value for the width of the first furrow of the plough (for example, one or more target values for each ploughing run through the work area); and iii) a target value for the furrow width (for example, one or more target values for each ploughing run through the work area). Advantageously, the controller 552 set the guiding lines information such that at an integer number of ploughing runs will fit across the entire width of the work area of the field. In this way, the ploughing operation can cover the entire field without leaving a strip of unploughed soil on one side and without turning over the soil in any portions of the field twice. Furthermore, the controller 552 can set the guiding lines information such that the width of the first furrow and the furrow width of the plough is the same for the majority, if not all, of the ploughing runs. In turn, this leads to a more even ploughing operation.

In this example, the controller 552 can also set the furrow width by providing a furrow width control signal 559 to a plough width adjustment mechanism 582. In one example, the plough width adjustment mechanism 582 can rotate the main frame of the plough about a pivot such that the plough bodies move along a path that has a lateral component with respect to the direction of travel of the plough. As discussed above, such a rotation sets the furrow width of the plough.

The controller 552 can set the furrow width based on one or more of: i) the first furrow width (as determined by the controller 552 and represented in Figure 5 by the first furrow control signal 560); ii) the determined plough location information; iii) any received guiding lines information; iv) the received furrow edge information 553; and v) the direction of travel of the plough / tractor.

For example, the controller 552 can set the furrow width such that it has a desired relationship with the first furrow width. This desired relationship may be that each of the furrows has the same width as the first furrow. Alternatively, the desired relationship may be that the first furrow is wider or narrower than the other furrows, which can be beneficial in some ploughing conditions. In some examples, the controller 552 can set the furrow width such that the overall ploughing width (the sum of the first furrow width that is ploughed by the first plough body and the furrow width for each of the other plough bodies) has a desired value. In another example, the controller 552 can set the furrow width in such a way that it compensates for any difference between the actual location of the plough (as defined by the determined plough location information) and the intended location of the plough (as defined by the guiding lines information).

Figure 6 shows an example of a non-rectangular work area 603 of a field, that has a headland 605, 606 at each end. As discussed above, the plough can be turned around and reversed in the headlands 605, 606 such that it is ready for a next ploughing run through the working area 603 of the field.

There now follows an example of how a controller (such as the one shown in Figure 5) can determine guiding lines information for the work area 603 of the field. The controller receives field information that defines at least the width of the work area 603 of the field. In this example, this may be implemented by four sets of coordinates - one set for each corner of the work area 603 of the field - because the boundaries of the work area 603 are defined by four straight lines.

In this example, the controller determines the location of a calibration ploughing run based on tractor location information obtained during the calibration ploughing run. For instance, a first ploughing run 608a can be considered as a calibration run. Alternatively or additionally, one or more intermediate ploughing runs 608 through the work area (i.e. those between the first and the last ploughing runs) can be used as calibration ploughing runs.

The controller can then set target values for the width of the first furrow of the plough and target values for the furrow width for the remaining ploughing runs and also set the intended route for the remaining ploughing runs based on: i) the received field information; and ii) the determined location of the calibration ploughing run, such that at an integer number of ploughing runs will fit across the width of the remaining unploughed area of the work area of the field. If the calibration ploughing run is the first ploughing run, then the determined information, which can collectively be referred to as the guiding lines information, can indicate how the plough should be configured for the majority of the ploughing operation. If the calibration ploughing run is an intermediate ploughing run, then the determined guiding lines information can be used to update the configuration of the plough for the remaining ploughing runs based on its actual position partway through the ploughing operation. In this way, any discrepancies between the actual location of the plough and the expected location of the plough partway through the ploughing operation can be accounted for by reconfiguring the plough for the remaining ploughing runs. Therefore, the controller can set one or more of the target values for the width of a first furrow of the plough, the target values for the furrow width, and the intended route for the remaining ploughing runs based on: iii) one or more actual values of the width of the first furrow of the plough and one or more actual values of the furrow width that were used during the calibration ploughing run.

As will be appreciated from Figure 6, the controller can set, and then apply, target values for the width of the first furrow of the plough and / or the furrow width that change during a ploughing run. This is evident from Figure 6 because the work area 603 is non-rectangular and therefore not all of the ploughing runs are parallel with each other.

For a non-rectangular work area 603 such as the one shown in Figure 6, the controller can gradually change the target values for width of the first furrow of the plough and / or the furrow width during a predetermined number of ploughing runs. It some examples, the controller may apply an algorithm that automatically sets the predetermined number of ploughing runs to a minimum number such that as many of the ploughing runs as possible can be parallel with each other (and therefore can have a consistent value for the width of the first furrow and the furrow width for as many ploughing runs as possible). The predetermined number of ploughing runs can be adjacent to each other such that a rectangular work area is created for the remaining ploughing runs. In an alternative example, the controller can gradually change the target values for width of the first furrow of the plough and / or the furrow width for all of the ploughing runs such that the lateral operating characteristics of the plough are adjusted across the entire width of the work area 603 of the field.

For examples where the field has an angled furrow or field border (as shown in Figure 6) or a curved furrow or field border (not shown) to follow, there can be a benefit to controlling the plough such that the tractor can be driven in a straight line through the field where possible, while changing an operational parameter of the plough during a ploughing run to compensate for the non-linear furrow or field border yet maximising the area of the field that is turned over by the plough. In such an example, the direction of travel of the plough / tractor can be used by the controller to set the furrow width during a ploughing run. In this way, the controller can set the first furrow such that it follows the (non-linear) edge, and also set the furrow width to compensate "on the run" to create a straight edge by the last body. Such a straight edge can be aligned with the direction of travel of the tractor to effectively straighten out the non-linear edge for the next ploughing run. The driving direction of the tractor can be defined as a line between two GPS points, for example.

Figure 7 shows a computer implemented method of operating a plough according to the present disclosure. The computer implemented method can, for example, be performed by any controller processor disclosed herein.

At step 790, the method includes receiving furrow edge information. As described above, the furrow edge information represents the location of the edge of a furrow from an earlier ploughing run that is adjacent to the furrows being created as part of a current ploughing run.

At step 791, the method includes receiving tractor location information that represents the location of a tractor as it is propelling the plough during a ploughing run. In one example, the tractor information is provided by a GPS system that is associated with the tractor.

At step 792, the method includes receiving relative plough position information that defines the position of the plough relative to the tractor during the ploughing run, including the lateral position of the plough relative to the tractor during the ploughing run.

At step 793, the method involves determining plough location information, which represents the location of the plough, based on the received tractor location information and the received relative plough position information.

Then, at step 794, the method includes setting a width of a first furrow of the plough for the current and / or a future ploughing run based on the received furrow edge information and the determined plough location information. As described above, the method can also set a width of the plough for the current and / or a future ploughing run.

## Claims

1. A controller (552) for a plough, wherein the controller (552) is configured to:
receive furrow edge information (553), which represents the location of the edge of a furrow from an earlier ploughing run that is adjacent to the furrows being created as part of a current ploughing run;
receive tractor location information (555), which represents the location of a tractor as it is propelling the plough during the ploughing run;
receive relative plough position information (557) that defines the lateral position of the plough relative to the tractor during the ploughing run;
determine plough location information, which represents the location of the plough, based on the received tractor location information and the received relative plough position information; and
set a width of a first furrow (560) of the plough based on the received furrow edge information (553) and the determined plough location information for the current and / or a future ploughing run.

2. The controller of claim 1, further configured to:
receive guiding lines information, which defines at least an intended route of the plough through a work area of the field; and
set the width of the first furrow of the plough also based on the guiding lines information.

3. The controller of claim 1 or claim 2, further configured to:
set a furrow width (559) of the plough based on one or more of: the first furrow width (560); ii) the determined plough location information; iii) any received guiding lines information; iv) the received furrow edge information (553); and v) a direction of travel of the plough / tractor.

4. The controller of claim 1, further configured to:
receive field information that defines at least the width of a work area (603) of the field; and
determine guiding lines information for the ploughing runs (608) in the work area (603) of the field based on the received field information, wherein the guiding lines information comprises: i) an intended route of the plough through the work area of the field; ii) a target value for the width of the first furrow of the plough; and iii) a target value for the furrow width, such that at an integer number of ploughing runs will fit across the entire width of the work area of the field.

5. The controller of claim 4, further configured to:
determine the location of a calibration ploughing run (608a) based on tractor location information obtained during the calibration ploughing run; and
determine the guiding lines information for the remaining ploughing runs in the work area based on: i) the received field information; and ii) the determined location of the calibration ploughing run, such that at an integer number of ploughing runs will fit across the width of the remaining unploughed area of the work area of the field.

6. The controller of claim 5, wherein the calibration ploughing run (608a) is the first ploughing run in the work area of the field.

7. The controller of claim 5, wherein the calibration ploughing run is an intermediate ploughing run in the work area of the field.

8. The controller of any one of claims 5 to 7, further configured to:
determine the guiding lines information also based on: iii) values of the width of the first furrow of the plough and values of the furrow width that were used during the calibration ploughing run.

9. The controller of any one of claims 5 to 8, further configured to:
set, and then apply, target values for the width of the first furrow of the plough and / or the furrow width that change during a ploughing run.

10. The controller of claim 9, further configured to:
gradually change the target values for width of the first furrow of the plough and / or the furrow width during a predetermined number of ploughing runs.

11. The controller of claim 10, further configured to:
set the predetermined number of ploughing runs to a minimum number such that as many of the ploughing runs as possible in the work area can be parallel with each other.

12. The controller of claim 4, or any claim dependent from claim 4, further configured to:
autonomously drive the tractor that provides propulsion to the plough based on the determined guiding lines information.

13. A plough system comprising:
a plough; and
the controller of any preceding claim.

14. The plough system of claim 13, wherein the plough is connectable to a tractor in such a way that there is at least some lateral freedom of movement of the plough relative to the tractor.

15. A computer implemented method of operating a plough, the method comprising:
receiving furrow edge information (790), that represents the location of the edge of a furrow from an earlier ploughing run that is adjacent to the furrows being created as part of a current ploughing run;
receiving tractor location information (791) that represents the location of a tractor as it is propelling the plough during the ploughing run;
receiving relative plough position information (792) that defines the lateral position of the plough relative to the tractor during the ploughing run;
determining plough location information (793), which represents the location of the plough, based on the received tractor location information and the received relative plough position information; and
setting a width of a first furrow of the plough for the current and / or a future ploughing run (794) based on the received furrow edge information and the determined plough location information.
